# EUROPÄISCHE PATENTANMELDUNG

(11) **EP 3 062 043 A2**
(43) Veröffentlichungstag der Anmeldung: **31.08.2016**
(21) Anmeldenummer: 16157375.3
(22) Anmeldetag: 25.02.2016
(51) Int. Cl.: F25B 43/00, B01J 20/00, F25B 9/00

(54) **TROCKNER**

(30) Priorität: 27.02.2015 DE 102015203601
(71) Anmelder: Mahle International GmbH, 70376 Stuttgart (DE)
(72) Erfinder: Feuerecker, Dr. Günther, 70567 Stuttgart (DE); Walter, Michael, 70469 Stuttgart (DE)
(74) Vertreter: Grauel, Andreas

(57) **Zusammenfassung**

Die Erfindung betrifft einen Trockner (5) zum Trocknen eines Kältemittels in einem Kältemittelkreislauf durch Bindung von Wasser aus dem Kältemittel mittels des Trockners (5), wobei das Kältemittel CO₂ ist, wobei das Wasser durch eine chemische Reaktion durch Stoffumwandlung oder Einlagerung von Kristallwasser dem Kältemittel entzogen wird, wobei der Trockner und dessen im Kältemittelkreislauf auftretenden Reaktionsprodukte im Kältemittel unlöslich sind.

## Beschreibung

### Technisches Gebiet

Die Erfindung betrifft einen Trockner für ein Kältemittel, insbesondere gemäß dem Oberbegriff von Anspruch 1, und eine Trocknervorrichtung mit einem solchen Trockner.

### Stand der Technik

Bei Klimaanlagen mit ihren darin eingesetzten Kältemittelkreisläufen wird ein Trockner in einer Trocknervorrichtung eingesetzt, um Wasser aus dem Kältemittel herauszufiltern. Dazu wird bei Kältemittelkreisläufen mit R134a als Kältemittel, welches in der Vergangenheit eingesetzt wurde, Zeolith als Trocknermaterial eingesetzt. Dies ist bei R134a als Kältemittel sehr wirksam. Dabei wird das Zeolith als Trocknermaterial üblicherweise als Granulat in einem von Kältemittel durchströmbaren Behältnis in einem Fluidsammler vorgesehen, so dass das Trocknermaterial das Wasser aus dem flüssigen Kältemittel ausfiltern und aufnehmen kann. Da das Wasserabsorptionsvermögen von Zeolith hoch ist, kann der Partialdruck des Wassers im Kältemittel niedrig gehalten werden. Solche Fluidsammler mit Trockner sind beispielsweise durch die DE 697 22 215 T2 bekannt geworden. Die DE 10 2010 0040 403 A1 offenbart Zeolith oder Silicagel als Trocknermaterial für einen Kältemittelkreislauf mit R1234yf als Kältemittel.

Auch bei Kältemittelkreisläufen mit CO₂ als Kältemittel, welches auch als R744 bekannt ist, wird Zeolith als Trocknermaterial eingesetzt. Dabei wird das Trocknermaterial ebenso in einem Fluidsammler in einem für das Kältemittel durchströmbaren Behältnis aufgenommen, so dass es das Wasser aus dem Kältemittel herausfiltern kann.

Nun hat sich aber gezeigt, dass Zeolith als Trockner für Kältemittelkreisläufe mit CO₂ als Kältemittel nicht so gut geeignet ist, weil dabei das Wasser und auch das Kältemittel CO₂ selbst hinsichtlich der Absorption am Zeolith konkurrieren. Dabei sind auch nur sehr hochwertige Zeolithe mit Porendurchmessern von etwa 3 Å geeignet, was die Verwendung solcher Zeolithe auch relativ teuer macht.

Darüber hinaus ist die Speicherdichte bei Zeolith begrenzt, so dass etwa 50g Zeolith für zu speichernde 8g Wasser benötigt werden. Dabei ist es auch von Bedeutung, Bauraum einzusparen, weil der verfügbare Bauraum insbesondere für kombinierte Fluidsammler mit innerem Wärmeübertrager beispielsweise gemäß DE 10 2008 028 851 A1 immer weniger Bauraum zur Verfügung bekommt

### Darstellung der Erfindung, Aufgabe, Lösung, Vorteile

Es ist daher die Aufgabe der Erfindung, einen Trockner und eine Trocknervorrichtung zu schaffen, welcher bzw. welche bei der Verwendung von CO₂ als Kältemittel effektiv trocknen aber dennoch nur einen reduzierten Bauraum benötigen.

Die erfindungsgemäße Aufgabe zum Trockner wird mit den Merkmalen von Anspruch 1 gelöst.

Ein Ausführungsbeispiel der Erfindung betrifft einen Trockner zum Trocknen eines Kältemittels in einem Kältemittelkreislauf durch Bindung von Wasser aus dem Kältemittel mittels des Trockners, wobei das Kältemittel CO₂ ist, wobei das Wasser durch eine chemische Reaktion durch Stoffumwandlung oder Einlagerung von Kristallwasser dem Kältemittel entzogen wird, wobei der Trockner und dessen im Kältemittelkreislauf auftretende Reaktionsprodukte im Kältemittel unlöslich sind. Dadurch kann das Wasser, das sich im Kältemittel befindet, auf chemischem Wege durch chemische Reaktion umgewandelt oder eingelagert werden, wobei diese chemische Reaktion oder Einlagerung sich nur auf das Wasser bezieht und nicht durch das umgebende CO₂ gestört wird.

Besonders vorteilhaft ist es, wenn der Trockner und dessen im Kältemittelkreislauf auftretenden Reaktionsprodukte auch in Kältemittelöl unlöslich sind. Dadurch können der Trockner und die Reaktionsprodukte ohne Beeinflussung durch das vorhandene Kältemittelöl ausgefiltert werden.

Auch ist es vorteilhaft, wenn der Trockner ein elektrochemisches Element aus einem ersten Material, insbesondere eines Gehäuses, und einem zweiten Material ist, wobei das zweite Material unedler ist als das erste Material des Gehäuses. Dadurch wird gefördert, dass das Wasser sich an dem unedleren zweiten Material ansammelt bzw. von diesem angesammelt wird und von diesem gebunden wird.

Weiterhin ist es besonders vorteilhaft, wenn das erste Material Aluminium oder eine Aluminiumlegierung ist und das zweite Material Magnesium oder Calcium ist oder ein hygroskopischer Stoff ist, wie beispielsweise Aluminiumoxid, Calciumoxid, Calciumsulphat oder ähnliches.

Gemäß eines weiteren Aspekts des Erfindungsgedankens ist es vorteilhaft, wenn der Trockner als flüssiger Absorber ausgebildet ist, welcher in dem Kältemittel aufgenommen ist. Dabei soll die Bindung des Wassers mit dem flüssigen Absorber irreversibel sein, beispielsweise durch eine chemische Reaktion oder eine Komplexbildung. Dadurch kann der flüssige Absorber mit dem Kältemittel in dem Kältemittelkeislauf umgewälzt werden und gleichzeitig das im Kältemittel befindliche Wasser aufnehmen und binden.

Die Aufgabe zur Trocknungsvorrichtung wird mit den Merkmalen von Anspruch 6 gelöst.

Ein Ausführungsbeispiel der Erfindung betrifft eine Trocknervorrichtung mit einem Gehäuse mit einem Einlass für ein Kältemittel und mit einem Auslass für das Kältemittel, wobei das Gehäuse aus einem ersten Material besteht, wobei in dem Gehäuse ein zweites Material vorgesehen ist, wobei das zweite Material derart angeordnet ist, dass es von dem Kältemittel umströmbar und/oder von dem Kältemittel umgeben ist. Dadurch wird eine Trocknervorrichtung geschaffen, welche hinsichtlich des Bauraums optimiert ist, weil die Wasseraufnahmefähigkeit bzw. die Wasserfilterfähigkeit deutlich höher ist als bei dem bisher bekannten Zeolith als Trocknermaterial. Dadurch kann der für das Trocknermaterial zu verwendende Bauraum reduziert werden, was auch die gesamte Trocknervorrichtung kleiner bauen lässt.

Dabei ist es auch vorteilhaft, wenn das zweite Material unedler ist als das erste Material. So wird eine Art Opferanode erzielt, die am unedleren zweiten Material gebildet wird, so dass die beabsichtigte chemische Reaktion an dem zweiten Material stattfindet.

Auch ist es vorteilhaft, wenn das erste Material Aluminium oder eine Aluminiumlegierung ist und das zweite Material Magnesium, Calcium, oder ein sonstiger hygroskopischer Stoff ist, wie Aluminiumoxid, Calciumoxid, Calciumsulphat oder ähnliches. Dadurch ergibt sich eine gute Wasserfilterung bzw. Wasseraufnahme.

Besonders vorteilhaft ist es, wenn das zweite Material in einem von Kältemittel durchströmbaren Behältnis aufgenommen ist. Dabei kann das zweite Material als Pulver, als Granulat oder ähnliches ausgebildet sein, welches in dem Behältnis aufgenommen ist.

Weiterhin ist es auch vorteilhaft, wenn das Behältnis als ein Netz-, Gewebe- oder Vliesbehältnis oder -beutel ausgebildet ist oder es als Käfig ausgebildet ist. So kann das zweite Material sicher aufgenommen werden, ohne dass die Gefahr besteht, dass es weggespült wird.

Auch ist es vorteilhaft, wenn das Behältnis derart feinporig oder feinmaschig ausgebildet ist, dass Korrosionsprodukte des zweiten Materials von dem Behältnis zurückgehalten werden können.

Weitere vorteilhafte Ausgestaltungen sind durch die nachfolgende Figurenbeschreibung und durch die Unteransprüche beschrieben.

### Kurze Beschreibung der Zeichnungen

Nachstehend wird die Erfindung auf der Grundlage zumindest eines Ausführungsbeispiels anhand der Figuren der Zeichnung näher erläutert. Es zeigen:

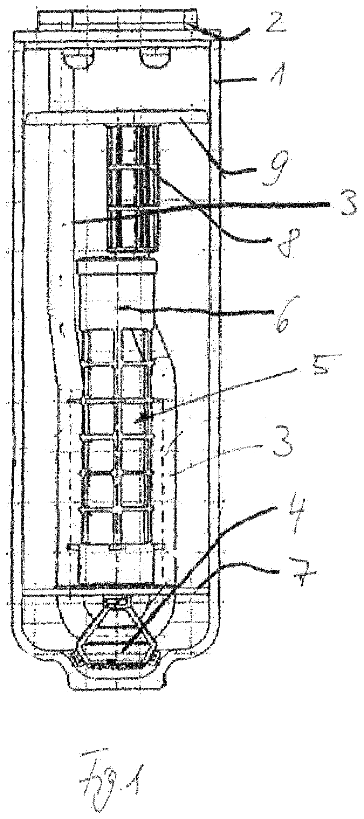

- Fig. 1: eine schematische Ansicht eines Fluidsammler, in welchem eine Trocknungsvorrichtung mit Trockner aufgenommen ist.

### Bevorzugte Ausführung der Erfindung

Die Figur 1 zeigt eine beispielhafte Ausführungsform eines Fluidsammlers, welcher ein Gehäuse 1 und einen Deckel 2 aufweist, welcher das Gehäuse 1 abschließt. In dem Deckel 2 sind Öffnungen als Einlass und als Auslass vorgesehen, welche das Einströmen und das Ausströmen des Kältemittels ermöglichen, wobei der Deckel 2 ansonsten einen gasdichten Verschluss des Gehäuses 1 gewährleistet.

Die Austrittsleitung des U-förmig gestalteten Saugrohrs 3 durchtritt den Deckel 2 und das zweite Ende, welches zum Innenraum des Sammlers hin offen ist, und wird von einem Gasfilter 8 abgeschirmt. Das U-förmig gestaltete Saugrohr 3 weist im Bereich der Umlenkung eine durch einen Ölfilter 4 geschützte Öffnung, die nicht gezeigt ist, auf, welche zur Rückführung von sich am Sammlerboden absetzenden Öl in den Kältemittelkreislauf der Klimaanlage dient.

An der Oberseite des Ölfilters 4 ist ein Trocknerbehältnis 6 angeordnet. Im Verbindungsbereich des Ölfilters 4 mit dem Trocknerbehältnis 6 ist eine erste Stützeinrichtung angeordnet, welche im Ausführungsbeispiel als Stützscheibe 7 ausgeführt ist. Die Stützscheibe 7 umfasst weiterhin beide Abschnitte des U-förmigen Saugrohrs 3, welche mittels der Stützscheibe 7 an der Gehäusewandung abgestützt werden.

Der Gasfilter 8, der das offene Ende des Saugrohres 3 abschirmt, ist an seinem oberen Ende von der Leiteinrichtung 9 bedeckt, mit der er mittels einer Clipverbindung verbunden ist. Die Leiteinrichtung 9 trennt den Kältemitteleinströmbereich vom beruhigten Sammelbereich. Die Gestaltung des Einströmbereichs ist wesentlich für einen möglichst konstanten Dampfgehalt des abgesaugten Kältemittels verantwortlich.

Das Saugrohr 3 der beispielhaften Ausführungsform ist ebenso wie das Gehäuse 1 und gegebenenfalls der Deckel 2 aus Aluminium oder einer Aluminiumlegierung hergestellt. Alle übrigen Bestandteile des Fluidsammlers sind beispielsweise aus einem CO2-beständige Polymer, beispielsweise aus Polyamid, hergestellt. Dabei kann aber auch der Deckel aus diesem Kunststoff hergestellt sein. Das Maschengewebe der Filter, welches bei der Fertigung dicht mit der Filterstruktur verbunden wird, weist eine Maschenweite von vorzugsweise zwischen 20 µm bis 150 µm auf.

In dem Trocknerbehältnis 6 ist der Trockner 5 aufgenommen, wobei das Trocknerbehältnis 6 in der Figur 1 als Art Käfig ausgebildet ist. Dabei ist das Behältnis bzw. der Käfig, welches bzw. welcher das zweite Material aufnimmt, von dem Kältemittel durchströmbar ausgebildet.

Alternativ zu dem gezeigten Käfig kann das Behältnis ebenso auch als ein Netz-, Gewebe- oder Vliesbehältnis oder -beutel ausgebildet sein.

Dabei ist das Behältnis derart feinporig oder feinmaschig ausgebildet, dass sowohl das zweite Material selbst als auch Korrosionsprodukte des zweiten Materials von dem Behältnis zurückgehalten werden können. Dadurch wird bewirkt, dass das zweite Material im Wesentlichen nicht in dem Kältemittelkreislauf frei zirkulieren kann und auch Reaktions- bzw. Korrosionsprodukte des zweiten Materials nicht frei im Kältemittelkreislauf zirkulieren können.

Gemäß der erfindungsgemäßen Trocknervorrichtung weist die Trocknervorrichtung ein Gehäuse 1 mit einem Einlass für das Kältemittel und mit einem Auslass für das Kältemittel auf, wobei das Gehäuse 1 aus einem ersten Material besteht, wobei in dem Gehäuse ein zweites Material vorgesehen ist, wobei das zweite Material derart angeordnet ist, dass es von dem Kältemittel umströmbar und/oder von dem Kältemittel umgeben ist. Das erste Material ist gemäß des Ausführungsbeispiels der Figur 1 Aluminium oder eine Aluminiumlegierung. Das zweite Material ist das Material, das vorzugsweise in dem Trocknerbehältnis 6 angeordnet ist. Es ist unedler als das erste Material. Das erste Material ist Aluminium oder eine Aluminiumlegierung und das zweite Material ist insbesondere Magnesium, Calcium, oder ein sonstiger hygroskopischer Stoff, wie beispielsweise Aluminiumoxid, Calciumoxid, calciumsulphat oder ähnliches.

In einer alternativen Ausführungsform ist das Trocknermaterial als flüssiger Absorber ausgebildet, welcher in dem Kältemittel aufgenommen ist.

## Patentansprüche

1. Trockner (5) zum Trocknen eines Kältemittels in einem Kältemittelkreislauf durch Bindung von Wasser aus dem Kältemittel mittels des Trockners (5), wobei das Kältemittel CO₂ ist, **dadurch gekennzeichnet, dass** das Wasser durch eine chemische Reaktion durch Stoffumwandlung oder Einlagerung von Kristallwasser dem Kältemittel entzogen wird, wobei der Trockner (5) und dessen im Kältemittelkreislauf auftretende Reaktionsprodukte im Kältemittel unlöslich sind.

2. Trockner (5) nach Anspruch 1, **dadurch gekennzeichnet, dass** der Trockner (5) und dessen im Kältemittelkreislauf auftretenden Reaktionsprodukte auch in Kältemittelöl unlöslich sind.

3. Trockner (5) nach Anspruch 1 oder 2, **dadurch gekennzeichnet, dass** der Trockner (5) ein elektrochemisches Element aus einem ersten Material, insbesondere eines Gehäuses (1), und einem zweiten Material ist, wobei das zweite Material unedler ist als das erste Material.

4. Trockner (5) nach Anspruch 3, **dadurch gekennzeichnet, dass** das erste Material Aluminium oder eine Aluminiumlegierung ist und das zweite Material Magnesium oder Calcium oder ein hygroskopischer Stoff ist, wie Aluminiumoxid, Calciumoxid, Calciumsulphat oder ähnliches.

5. Trockner (5) nach Anspruch 1 oder 2, **dadurch gekennzeichnet, dass** der Trockner (5) als flüssiger Absorber ausgebildet ist, welcher in dem Kältemittel aufgenommen ist.

6. Trocknervorrichtung mit einem Gehäuse (1) mit einem Einlass für ein Kältemittel und mit einem Auslass für das Kältemittel, wobei das Gehäuse (1) aus einem ersten Material besteht, wobei in dem Gehäuse (1) ein zweites Material angeordnet ist, wobei das zweite Material derart angeordnet ist, dass es von dem Kältemittel umströmbar und/oder von dem Kältemittel umgeben ist.

7. Trocknervorrichtung nach Anspruch 6, **dadurch gekennzeichnet, dass** das zweite Material unedler ist als das erste Material.

8. Trocknervorrichtung nach Anspruch 7, **dadurch gekennzeichnet, dass** das erste Material Aluminium oder eine Aluminiumlegierung ist und das zweite Material Magnesium, Calcium, oder ein sonstiger hygroskopischer Stoff ist, wie Aluminiumoxid, Calciumoxid, Calciumsulphat oder ähnliches.

9. Trocknervorrichtung nach Anspruch 6, 7 oder 8, **dadurch gekennzeichnet, dass** das zweite Material in einem von Kältemittel durchströmbaren Trocknerbehältnis (6) aufgenommen ist.

10. Trocknervorrichtung nach Anspruch 9, **dadurch gekennzeichnet, dass** das Trocknerbehältnis (6) als ein Netz-, Gewebe- oder Vliesbehältnis oder -beutel ausgebildet ist oder es als Käfig ausgebildet ist.

11. Trocknervorrichtung nach Anspruch 10, **dadurch gekennzeichnet, dass** das Trocknerbehältnis (6) derart feinporig oder feinmaschig ausgebildet ist, dass Korrosionsprodukte des zweiten Materials von dem Trocknerbehältnis (6) zurückgehalten werden können.
